# EUROPEAN PATENT APPLICATION

(11) **EP 2 138 954 A2**
(43) Date of publication of application: **30.12.2009**
(21) Application number: 09251636.8
(22) Date of filing: 24.06.2009
(51) Int. Cl.: G06K 9/20

(54) **Finger vein authentication device**

(30) Priority: 27.06.2008 JP 2008168826
(71) Applicant: Hitachi CO., LTD., 6-6 Marunouchi 1-chome Chiyoda-ku Tokyo 100-8280 (JP)
(72) Inventor: Suginobu, Manabu, Tokyo 100-8220 (JP); Horiuchi, Yuichi, Tokyo 100-8220 (JP)
(74) Representative: Calderbank, Thomas Roger

(57) **Abstract**

A finger vein authentication device includes a finger information register unit for extracting information of a vein pattern from a vein image and registering the same as a matching template in a memory, and a finger vein authentication unit for extracting information of a vein pattern from the vein image and matching the same with the matching template to perform personal authentication. The device includes a finger image processing unit for extracting characteristics data of the finger from the vein image and a finger placement state determining unit for determining whether a placement state of the finger is good or not according to whether the characteristics data of the finger is within a predetermined range or not. If the determination result of the finger placement state determining unit is not good, the user is instructed to correctly place the finger by a picture output unit and/or a voice output unit, and the vein image is obtained again.

## Description

The present invention relates to a biometric authentication technique for performing personal authentication using biometric information. More particularly, the present invention relates to a technique effectively applied to a finger vein authentication device for personal authentication by a vein pattern of a finger.

In recent years, it has been important to safely manage personal information, and personal authentication techniques using biometric information have been employed in various situations. For example, since the biometric authentication technique using a vein pattern of a finger uses information within a living body, it can achieve a safer and more user-friendly biometric authentication device. The biometric authentication device using a vein pattern of a finger is easier to downsize as compared with the biometric authentication devices using other biometric information, and thus it is installable to various places. For example, by installing the finger vein authentication device as a key of an entrance/exit door or a locker, it is possible for users to enter and exit a room and manage their valuables without bringing a key.

In order to accurately authenticate, upon authentication, it is important for the finger vein authentication device to match by using a vein pattern imaged with the same conditions as that at the time of registration of the vein pattern. If the way of placing a finger differs between the registration and authentication of the vein pattern with respect to the way of placing the finger upon imaging, the authentication rate is lowered.

As to the finger vein authentication device using a vein pattern of a finger and a technique for improving the accuracy of the device, for example, Japanese Patent Application Laid-Open Publication No. 2002-083298 (Patent Document 1) discloses a personal authentication device which obtains a vein pattern by imaging a finger in a non-contact manner and matches the vein pattern with performing rotational correction using contour and the like. In addition, Japanese Patent Application Laid-Open Publication No. 2003-030632 (Patent Document 2) discloses a finger authentication device to which a guide is provided at a place for placing a finger on so that the position of the finger is fixed, in order to equalize imaging conditions.

In the technique described in Patent Document 1, a correction method for such a case is disclosed that a finger is rotated in the horizontal direction upon imaging because the finger is imaged in a non-contact manner. However, the finger is considered to be placed in various ways including not only the case where the finger is rotated in the horizontal direction to the imaging plane but also the case where the fingertip or the base of the finger is floated. Therefore, for example, if a vein pattern is registered as being imaged other than a state where the finger is rotated in the horizontal direction, there is a possibility that the vein pattern cannot be completely corrected upon authentication, so it may be unable to improve the authentication accuracy.

Further, Patent Document 2 discloses a method for stabilizing the position to place a finger by providing a switch button at the position to place the fingertip and providing a guiding groove at the position to place the finger. However, the switch button for the fingertip can be pushed not only by the fingertip but also by the ball of the finger and the like, and as a result, the fingertip or the base of the finger may be possibly floated.

Moreover, as to the guiding groove at the position to place the finger, it is difficult to fit the guiding groove to a shape of each individual's finger because the size and shape of a finger differ among individuals. For example, in the case where a person who has thin fingers places his/her finger, as the margin of the finger is wide with respect to the guiding groove, the finger may be placed with being rotated in the horizontal direction. If the finger is imaged when it is placed in a bad way and the imaged image is registered as a vein pattern, the imaging conditions at authentication may differ from that at registration, and so it may be impossible to improve the authentication accuracy.

For example, in the case of using the finger vein authentication device installed to an entrance/exit door, a vehicle door, or the like, once a vein pattern is registered, thereafter, an authentication operation is performed every time when the person enters and exits the room or unlocks the vehicle door. As described above, in the state of usage having less frequent registration operations than authentication operations, an instructor is provided on the occasion of registration, for example, and the instructor teaches how to place a finger to obtain a vein pattern in a good state and allows users to carefully register a vein pattern with showing a manual, so that the authentication accuracy is stabilized.

Meanwhile, for example, in the case of using the finger vein authentication device installed in stations, lockers in fitness centers, or the like, the state of usage in this case is different from the above-described one, and there is a situation where registrations and authentications of finger patterns are frequently made by the general public. In such a state of usage, it is difficult to deal with the situation by, for example, teaching how to place a finger by instructors, and it is not expectable that users carefully read manuals etc. Therefore, there may be the case where good vein patterns are not registered and the authentication accuracy cannot be improved.

Accordingly, a preferred aim of the present invention is to provide a finger vein authentication device which is capable of obtaining a good vein pattern with allowing a person to place his/her finger correctly without explaining how to place his/her finger, so that the authentication accuracy can be improved. The above and other preferred aims and novel characteristics of the present invention will be apparent from the description of the present specification and the accompanying drawings.

The typical ones of the inventions disclosed in the present application will be briefly described as follows.

A finger vein authentication device according to a typical embodiment of the present invention includes: a finger image processing unit which extracts characteristics data of a finger from an image upon imaging a vein pattern of the finger; and a finger placement state determining unit which determines whether the finger is properly placed or not with respect to float and rotation of the finger, and the like, based on the extracted characteristics data. If the finger is not properly placed, the finger vein authentication device instructs the user to correctly place the finger on site by a picture output unit or a voice output unit, thereby stably obtaining a good vein pattern.

The effects obtained by typical aspects of the present invention will be briefly described below.

According to the typical embodiment of the present invention, it is possible to obtain a vein pattern in a good way of placing a finger upon registration of a matching template of the vein pattern and upon personal authentication using the vein pattern, thereby preventing lowering of the authentication accuracy depending on the way of placing the finger.

### IN THE DRAWINGS

FIG. 1 is a block diagram illustrating a configuration example of a finger vein authentication device according to a first embodiment of the present invention;
FIG. 2 is a diagram illustrating an example of a function block of a program executed on a processor according to the first embodiment of the present invention;
FIGS. 3A - 3B are diagrams each illustrating a mounting example of the finger vein authentication device according to the first embodiment of the present invention;
FIGS. 4A - 4B are diagrams each illustrating a mounting example of the finger vein authentication device according to the first embodiment of the present invention;
FIG. 5 is a diagram schematically illustrating an example of an image imaged with placing a finger on the finger vein authentication device according to the first embodiment of the present invention;
FIG. 6A - 6B are diagrams each schematically illustrating an example of an image imaged with placing a finger on the finger vein authentication device according to the first embodiment of the present invention;
FIG. 7A - 7F are diagrams each schematically illustrating an example of an image imaged with placing a finger on the finger vein authentication device according to the first embodiment of the present invention;
FIG. 8 is a flowchart illustrating an example of a registration procedure of a vein pattern of a finger vein authentication device according to a conventional technique;
FIG. 9 is a flowchart illustrating an example of an authentication procedure of the finger vein authentication device according to the conventional technique;
FIG. 10 is a flowchart illustrating an example of a registration procedure of a vein pattern of the finger vein authentication device according to the first embodiment of the present invention;
FIG. 11 is a flowchart illustrating an example of an authentication procedure of the finger vein authentication device according to the first embodiment of the present invention;
FIG. 12 is a diagram illustrating a mounting example in a case where the finger vein authentication device is installed to a locker, according to the first embodiment of the present invention;
FIGS. 13A - 13B are diagrams each illustrating a mounting example of a finger vein authentication device according to a second embodiment of the present invention;
FIGS. 14A - 14B are diagrams each illustrating a mounting example of the finger vein authentication device according to the second embodiment of the present invention;
FIG. 15 is a flowchart illustrating an example of a registration procedure of a vein pattern of the finger vein authentication device according to the second embodiment of the present invention;
FIG. 16 is a flowchart illustrating an example of an authentication procedure of the finger vein authentication device according to the second embodiment of the present invention;
FIG. 17 is a diagram schematically illustrating an image imaged with placing a finger on a finger vein authentication device according to a third embodiment of the present invention, so as to emphasize the contour and vein of the finger;
FIG. 18A - 18B are diagrams each schematically illustrating an image imaged with placing a finger on the finger vein authentication device according to the third embodiment of the present invention, so as to emphasize the contour and vein of the finger;
FIG. 19A - 19B are diagrams each schematically illustrating an image imaged with placing a finger on the finger vein authentication device according to the third embodiment of the present invention, so as to emphasize the contour and vein of the finger;
FIG. 20 is a flowchart illustrating an example of a registration procedure of a vein pattern of the finger vein authentication device according to the third embodiment of the present invention;
FIG. 21 is a flowchart illustrating an example of an authentication procedure of the finger vein authentication device according to the third embodiment of the present invention; and
FIG. 22 is a block diagram illustrating a configuration example of a finger vein authentication device according to a conventional technique.

Hereinafter, embodiments of the present invention will be described in detail with reference to the accompanying drawings. Note that, components having the same function are denoted by the same reference symbols throughout the drawings for describing the embodiment, and the repetitive description thereof will be omitted. Also, in the following, the present invention will be described as compared with a conventional technique to make the features of the present invention easy to understand.

### <Summary>

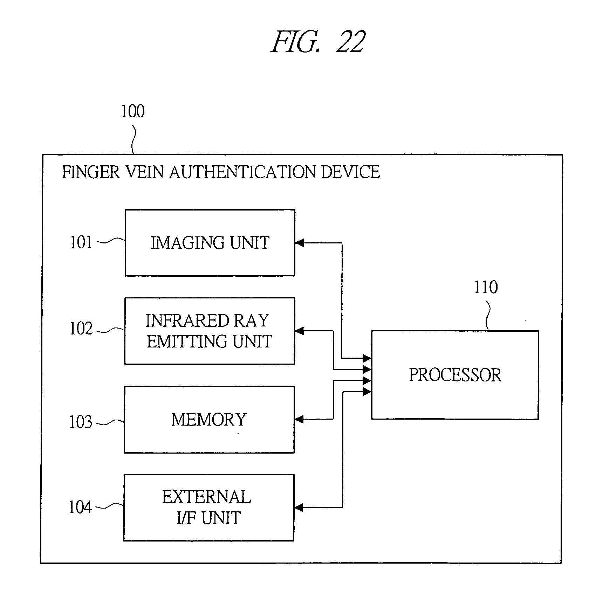

FIG. 22 is a block diagram illustrating a configuration example of a finger vein authentication device according to a conventional technique. In FIG. 22, a finger vein authentication device 100 includes: an imaging unit 101 which images veins of a finger; an infrared ray emitting unit 102; a processor 110 which executes programs to perform an authentication processing etc.; a memory 103 which holds data or program; and an external interface (I/F) unit 104 for input/output of data etc.

When a finger inserted into the finger vein authentication device 100 is irradiated with infrared rays outputted from the infrared ray emitting unit 102, the infrared rays are scattered within the finger. The infrared rays scattered from the finger are inputted to the imaging unit 101. Since veins have an absorption rate of infrared ray differing from other parts of the finger, a vein pattern can be imaged. The imaged image is stored as a matching template in the memory 103 or an external device via the external I/F unit 104.

Upon authentication, by executing a program stored in the memory 103 by the processor 110, or by using the external device connected via the external I/F unit 104, the matching template and the authentication data imaged for authentication are matched to determine whether the vein patterns are agreed with the matching result or not.

Conventionally, for example, it has been practiced such that the finger vein authentication device 100 and a personal computer (PC) are connected via the external I/F unit 104, and template data of a vein pattern is sent to the PC from the finger vein authentication device 100 and stored as the matching template on the PC. Also, upon authentication, matching of the matching template and the authentication data is performed on the PC, and the authentication result is verified on the PC.

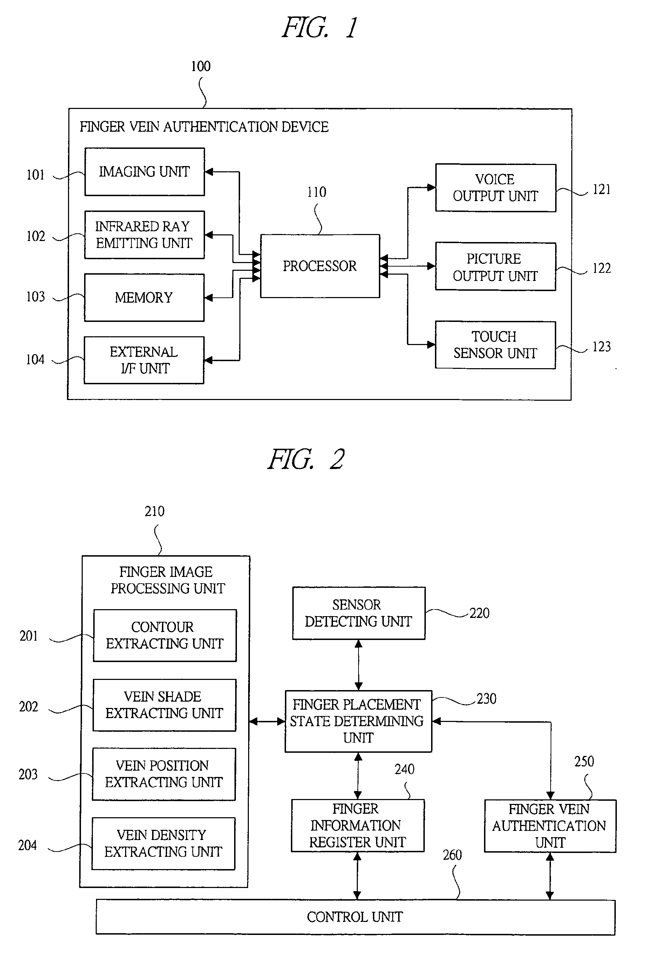

On the other hand, FIG. 1 is a block diagram illustrating a configuration example of a finger vein authentication device according to an embodiment of the present invention. It is configured such that a voice output unit 121, a picture output unit 122, and a touch sensor unit 123 are added to the configuration of the finger vein authentication device 100 of the conventional technique illustrated in FIG. 22. Similarly to the finger vein authentication device 100 of the conventional technique, a finger inserted into the finger vein authentication device 100 is irradiated with light outputted from the infrared ray emitting unit 102, and a vein pattern is imaged by using a difference in absorption rate of infrared ray of the vein portion at this time.

While the finger vein authentication device 100 of the conventional technique stores the imaged image as a matching template on the PC via the external I/F unit 104, a program stored in the memory 103 is executed by the processor 110 before storing the matching template in the finger vein authentication device 100 of the present embodiment, so that it is determined whether the imaged finger has been placed in a normal state or not.

If the state of the placed finger is not normal, a cause of the abnormality and instruction of correctly placing the finger are notified to the user through the voice output unit 121 and the picture output unit 122 to give guidance for correction. If it is determined that the finger is placed in a normal state, the imaged vein pattern is registered as a matching template. In the same way, upon authentication, it is determined whether the imaged finger is placed in a normal state or not, and the instruction of correctly placing the finger is notified to the user through the voice output unit 121 and the picture output unit 122 to give a guidance for correction. If it is determined that the finger is placed in a normal state, the matching template and the authentication data are matched to determine whether the vein patterns are agreed with the matching result or not.

FIG. 2 is a diagram illustrating an example of a function block of a program executed by the processor 110 in the finger vein authentication device 100 of the present embodiment. A finger information register unit 240 performs a processing for storing a vein pattern as a matching template, and a finger vein authentication unit 250 performs a processing for matching the matching template and the authentication data. A finger placement state determining unit 230 determines whether the imaged finger is placed in a normal state or not upon registration of a vein pattern and authentication thereof. At this time, the determination uses information from a sensor detecting unit 220 for obtaining a detection result of a touch sensor unit 123 or from a finger image processing unit 210 for extracting characteristics data of the image of the imaged finger. A control unit 260 controls the whole of the finger vein authentication device 100.

### <First Embodiment>

Hereinafter, a finger vein authentication device 100 of a first embodiment of the present invention will be described. The finger vein authentication device 100 of the present embodiment performs the processings to be described below so that the finger vein authentication device 100 itself performs registration and authentication of matching templates, check of presence and absence of an inserted finger, and indication and explanation of usage instructions of the device or cautions for users by voice or picture. Note that, it can be achieved to provide the usage instructions of the device, a picture of the placed finger, or the like by a moving picture by use of various methods using known techniques and the like, and so it is not described in details here. However, it is not needless to say that this point is a feature of the present invention.

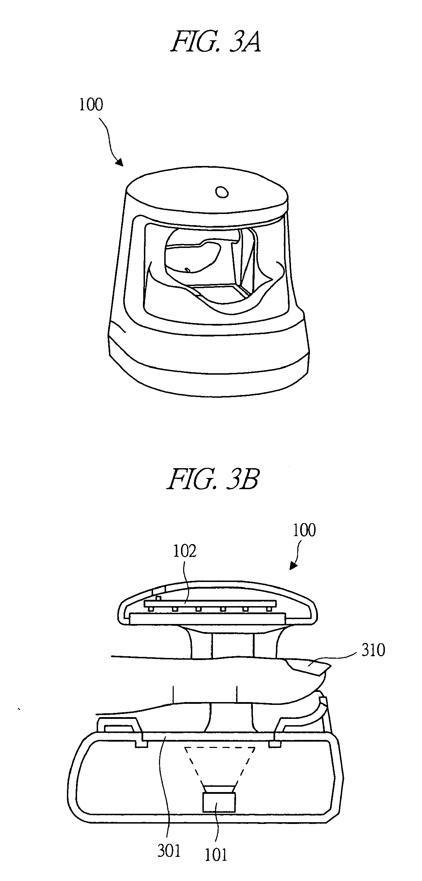

FIGS. 3A to 4B are diagrams each illustrating a mounting example of the finger vein authentication device 100 according to the present embodiment. FIGS. 3A and 3B illustrate an example of the finger vein authentication device 100 of a system of irradiating infrared rays from above. FIG. 3A is a perspective view illustrating the exterior of the finger vein authentication device 100, and FIG. 3B is a cross-sectional view of the finger vein authentication device 100. An infrared ray emitting unit 102 is provided at a position above and corresponding to a position at which a finger 310 is placed. Near-infrared rays outputted from the infrared ray emitting unit 102 are irradiated on the finger 310 and the finger 310 is imaged by an imaging unit 101 through an imaging window 301.

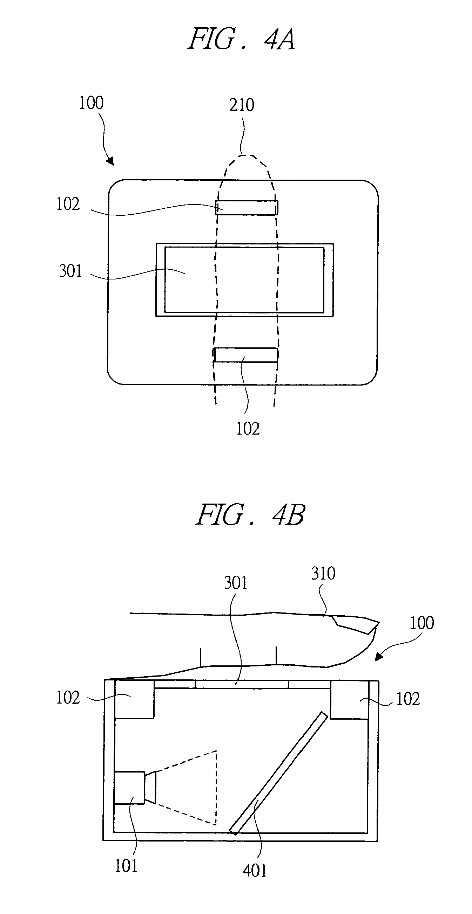

FIGS. 4A and 4B illustrate an example of the finger vein authentication device 100 of a system of irradiating infrared rays from below. The infrared ray emitting unit 102 is provided at a position below and corresponding to a position at which the finger 310 is placed. Near-infrared rays outputted from the infrared ray emitting unit 102 are irradiated on the finger 310 and the finger 310 is imaged by the imaging unit 101 through the imaging window 301 and a mirror 401.

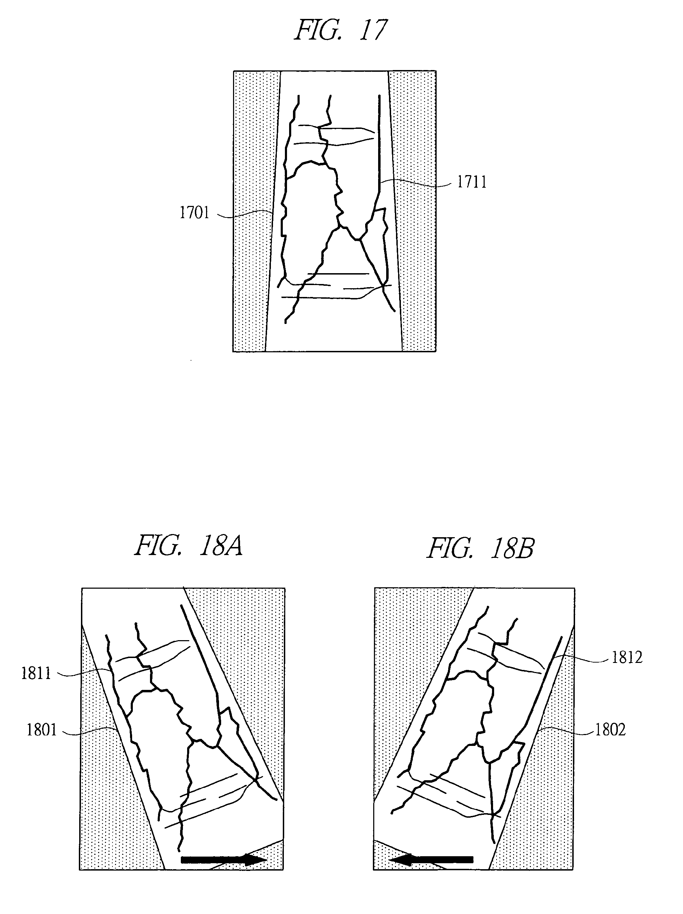

Since the finger vein authentication device 100 images a vein pattern by using differences in infrared-ray absorption rate between blood vessel (blood) and other tissues, the finger vein authentication device 100 images a vein pattern as illustrated in FIG. 17 with using a camera having a high spectral sensitivity in the infrared band as the imaging unit 101 and providing a filter on the imaging window 301 so that infrared rays can easily transmit through the imaging window 301. When infrared rays are irradiated on a finger, portions having a small infrared-ray absorbing quantity and portions transmitting infrared rays are expressed in white (brightly). On the other hand, vein portions having a large infrared-ray absorbing quantity and peripheral portions of the finger which infrared rays are difficult to reach are imaged in black (darkly) because the light quantity of infrared rays is small. In this manner, a contour of a finger 1701 and veins within a finger 1711 can be recognized.

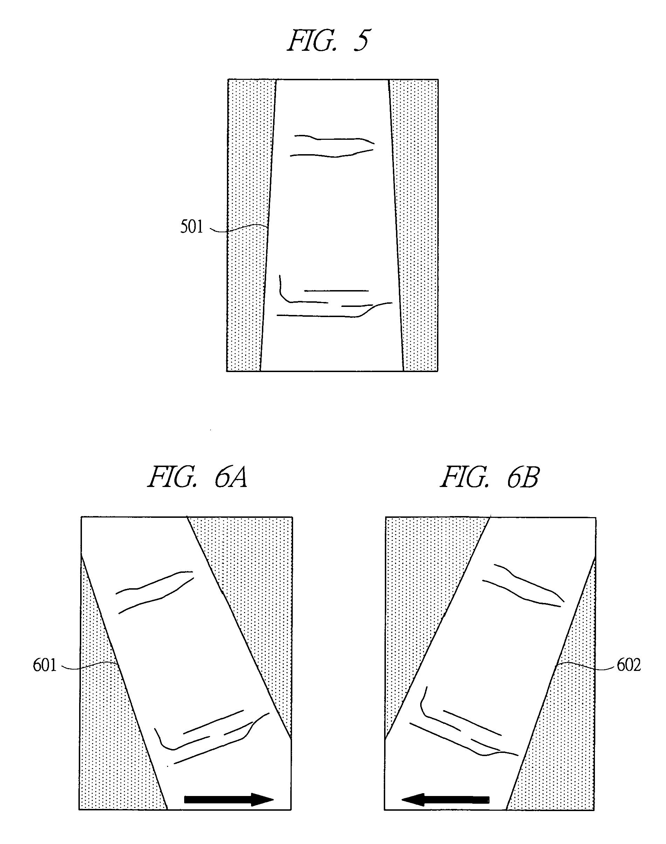

FIGS. 5 to 7F are diagrams schematically expressing examples of images imaged with placing a finger on the finger vein authentication device 100. Although veins are also imaged as illustrated in FIG. 17 in the actually imaged image because the light quantity distribution of infrared rays is expressed by black and white in the imaged image, illustration of veins is omitted and only the contour of the finger is illustrated here to describe processings related to the contour of the finger. In addition, the region of the imaged finger is set to a part in the vicinity of the top joint to the second joint of the finger, and the wrinkles illustrated in FIGS. 5 to 7B are illustrated to make the object of the image to be easily recognized as the finger although they are not actually imaged in the imaging.

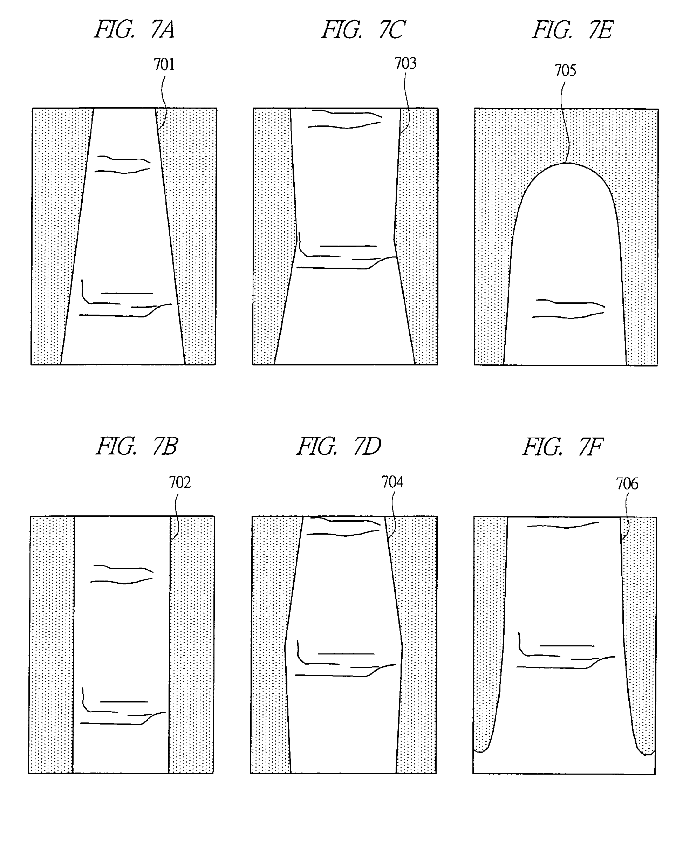

FIG. 5 is a diagram illustrating an example of an image imaged when the finger is normally placed on the finger vein authentication device 100 of FIGS. 3A to 4B. As described above, since the image imaged according to the light quantity distribution of infrared rays is expressed by black and white, the shape of a contour 501 and a position thereof can be detected from the image. On the other hand, FIGS. 6 and 7 are diagrams illustrating examples of imaged images when a finger is placed on the finger vein authentication device 100 in various pattern states.

FIGS. 6A and 6B are diagrams illustrating examples of images imaged when a finger is placed in a state of being rotated in the horizontal direction with respect to the imaging window 301. FIG. 6A is a diagram illustrating an example of an image imaged in a state where a finger is rotated in the direction indicated by the arrow as compared with the way of placing the finger of FIG. 5. As compared with the contour 501 of FIG. 5, an inclination of a contour 601 of FIG. 6A is rotated counterclockwise. Therefore, by comparing the inclination of the contour, it can be determined that the actually placed finger is placed in a state of being rotated in the horizontal direction (direction of the arrow).

FIG. 6B is a diagram illustrating an example of an image imaged when a finger is placed in a state of being rotated in a direction (direction of the arrow) opposite to that of FIG. 6A. Similar to FIG. 6A, by comparing the inclination of the contour 501 with that of a contour 602, it can be determined that the finger is placed in a state of being rotated in the horizontal direction (direction of the arrow).

FIGS. 7A and 7B are diagrams illustrating examples of images imaged when a finger is placed in a state of having the fingertip or base of the finger floated. FIG. 7A is a diagram illustrating an example of an image imaged in a state of having the fingertip floated as compared with the way of placing the finger of FIG. 5. As compared with the contour 501 of FIG. 5, a contour 701 of FIG. 7A has the small width at the fingertip portion (upper side of the image). This is because the position of the fingertip at the time of imaging the image of FIG. 7A is away (floated) from the imaging unit 101 as compared with the position of the fingertip at the time of imaging the image of FIG. 5. In this manner, it can be determined that the finger is placed in a state of having the fingertip floated, as the contour width of the fingertip is narrower while the contour width of the base of the finger is unchanged.

FIG. 7B is a diagram illustrating an example of an image imaged when a finger is placed in a state of having the base of the finger floated as compared with the way of placing the finger of FIG. 5. As compared with the contour 501 of FIG. 5, a contour 702 of FIG. 7B has the small width at the base of the finger portion (lower side of the image). This is because the position of the base of the finger portion at the time of imaging the image of FIG. 7B is away from the imaging unit 101 as compared with the position of the base of the finger at the time of imaging the image of FIG. 5. In this manner, it can be determined that the finger is placed in a state of having the base of the finger floated, as the contour width of the base of the finger is narrower while the contour width of the fingertip is unchanged.

FIGS. 7C and 7D are diagrams illustrating examples of images imaged when a finger is placed in a state of having the finger bended and in a state of having the finger warped, respectively. FIG. 7C is a diagram illustrating an example of an image imaged in a state of having the finger bended as compared with the way of placing the finger of FIG. 5. As compared with the contour 501 of FIG. 5, a contour 703 of FIG. 7C has the small contour width at a portion corresponding to the joint portion of the finger. This is because the position of the joint portion at the time of imaging the image of FIG. 7C is away from the imaging unit 101 as compared with the position of the joint portion at the time of imaging the image of FIG. 5. In this manner, it can be determined that the finger is placed in a state of having the finger bended, as the contour width of the joint portion is smaller while the contour widths of the fingertip and the base of the finger are unchanged.

FIG. 7D is a diagram illustrating an example of an image imaged in a state of having a finger warped as compared with the way of placing the finger of FIG. 5. As compared with the contour 501 of FIG. 5, a contour 704 of FIG. 7D has a large contour width at a portion corresponding to the joint portion of the finger. This is because the positions of the fingertip and the base of the finger at the time of imaging the image of FIG. 7D are away from the imaging unit 101 as compared with those at the time of imaging the image of FIG. 5. In this manner, it can be determined that the finger is placed in a state of having the finger warped as the contour width at the joint portion is wider while the contour widths of the fingertip and the base of the finger are unchanged.

FIGS. 7E and 7F are diagrams illustrating examples of images imaged in a state of having a finger not reaching a normal imaging position and a state of having a finger being across the normal imaging position, respectively. FIG. 7E is a diagram illustrating an example of an image imaged in a state of having a finger not reaching a normal imaging position as compared with the way of placing the finger in FIG. 5. As compared with the contour 501 of FIG. 5, a contour 705 of the fingertip is imaged in the contour 705 of FIG. 7E. This is because the position of the finger at the time of imaging the image of FIG. 7E does not reach the normal imaging position as compared with the position of the finger at the time of imaging the image of FIG. 5. In this manner, it can be determined that the finger is placed in a state of not reaching the normal imaging position as the contour 705 of the fingertip that is not present in the image of FIG. 5 is imaged.

FIG. 7F is a diagram illustrating an example of an image imaged in a state of having a finger being across the normal imaging position as compared with the way of placing the finger of FIG. 5. As compared with the contour 501 of FIG. 5, a contour 706 of the base of the finger (web portion between fingers) is imaged in the contour 706 of FIG. 7F. This is because the position of the finger at the time of imaging the image of FIG. 7F is placed across the normal imaging position as compared with the position of the finger at the time of imaging the image of FIG. 5. In this manner, it can be determined that the finger is placed across the normal imaging position as the contour 706 of the base of the finger that is not present in FIG. 5 is imaged.

As described with reference to FIGS. 7A to 7F, it can be determined how a finger is placed by comparing an inclination or a width of a contour of the finger in the case of having the finger placed normally with an inclination or a width of a contour of an imaged finger.

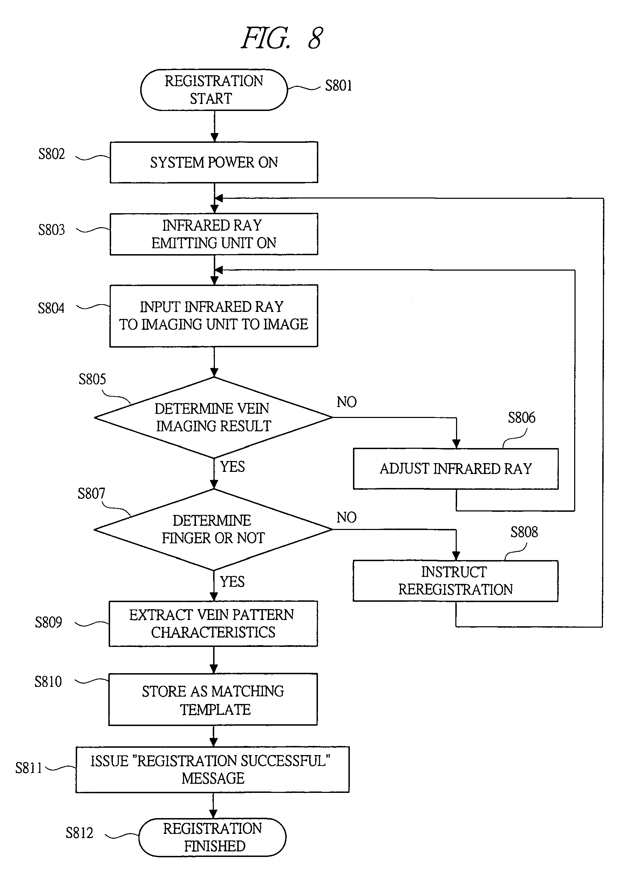

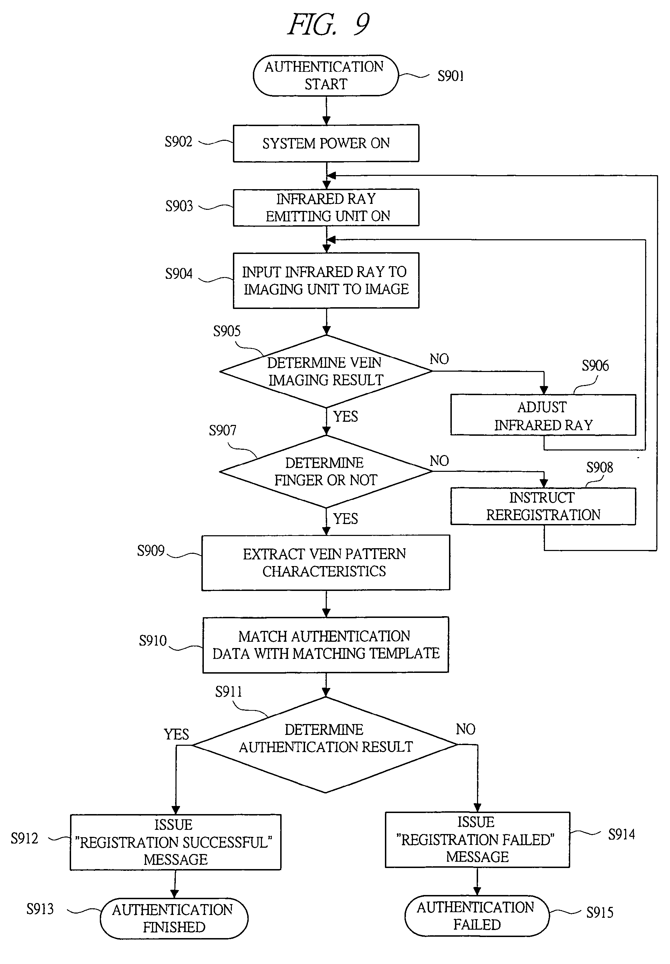

Hereinafter, a registration procedure and an authentication procedure of a vein pattern of the finger vein authentication device 100 of the present embodiment will be described. First, with reference to FIGS. 8 and 9, a registration procedure and an authentication procedure of a vein pattern of the finger vein authentication device 100 of a conventional technique will be described.

FIG. 8 is a flowchart illustrating an example of the registration procedure of the vein pattern of the finger vein authentication device 100 of the conventional technique. When the registration procedure is started (step S801), the power of the main unit of the finger vein authentication device 100 is turned on (step S802), and the infrared ray emitting unit 102 is turned on (step S803). Next, infrared rays are inputted to the imaging unit 101 from the imaging window 301 to image veins (step S804).

Next, it is determined whether veins have been imaged or not (step S805). If the veins have not been imaged, the infrared ray emitting unit 102 is adjusted (step S806), then the procedure is returned to the step S804 to perform imaging again, and the infrared emitting unit 102 is adjusted until veins are imaged. Since there are individual differences in the width and thickness of a finger, the infrared ray emitting unit 102 is adjusted until veins are imaged in the best condition.

In the step S805, if veins can be imaged, it is determined whether the imaged object is a finger or not (step S807). If the object is not a finger, the user is instructed to reregister via an external device or the like (step S808). If the object is a finger, characteristics of a vein pattern are extracted from the imaged image (step S809), and the extracted data is stored in a memory 103, an external device, or the like as a matching template (step S810), then registration successful message is notified to the user via an external device or the like (step S811), and the registration procedure of the vein pattern is finished (step S812).

FIG. 9 is a flowchart illustrating an example of an authentication procedure of the finger vein authentication device 100 of the conventional technique. When the authentication procedure is started (step S901), in steps S902 to S908, the infrared ray emitting unit 102 is adjusted until veins are imaged, then it is determined whether the imaged object is a finger or not similarly to the steps S802 to S808 of FIG. 8, and characteristics of the vein pattern are extracted if the object is a finger (step S909).

Next, the matching template stored in the memory 103 or the like in the step S810 of FIG. 8 and the characteristics of the vein pattern extracted in the step S909 are matched (step S910) to determine the authentication result (step S911). If the authentication is failed, failure in authentication is notified to the user via an external device or the line (step S914), and the authentication procedure is terminated (step S915). If the authentication is succeeded, authentication successful message is notified to the user via an external device or the like (step S912), and the authentication procedure is finished (step S913).

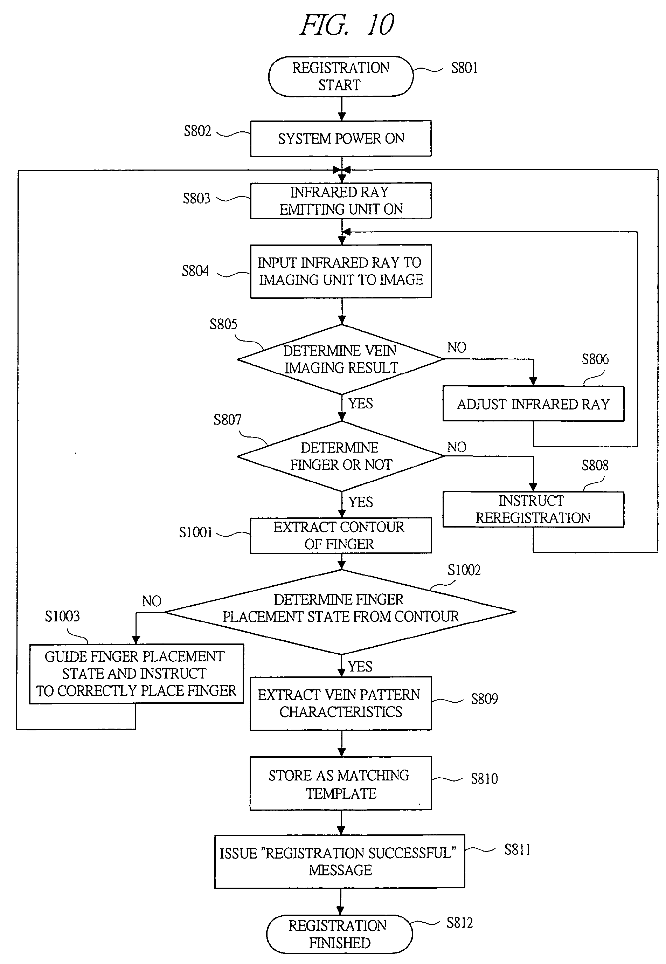

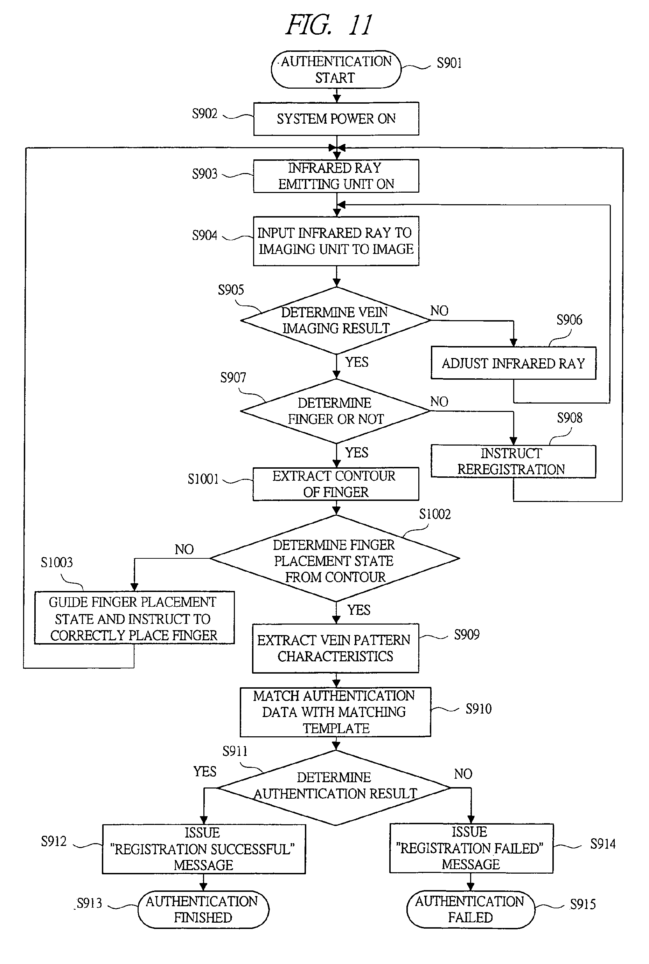

Next, with reference to FIGS. 10 and 11, the registration procedure and the authentication procedure of the vein pattern in the finger vein authentication device 100 according to the present embodiment will be described. FIG. 10 is a flowchart illustrating an example of the registration procedure of the vein pattern in the finger vein authentication device 100 of the present embodiment, and FIG. 11 is a flowchart illustrating an example of the authentication procedure of the finger vein authentication device 100 of the present embodiment.

These flowcharts of FIGS. 10 and 11 have a step S1001 for extracting a contour of a finger, a step S1002 for determining a finger placement state from contour data of the finger, and a step 1003 for guiding the finger placement state to instruct correctly placing the finger, which are added to the flowcharts of the registration and authentication procedures in the finger vein authentication device 100 of the conventional technique shown in FIGS. 8 and 9, respectively. Other steps are the same with those of the flowcharts of FIGS. 8 and 9, and thus, descriptions thereof will be omitted. Hereinafter, the added steps will be described.

In the flowchart of the registration procedure of a vein pattern in FIG. 10, if it is determined that the imaged object is a finger in the step S807, the contour of the finger is extracted as characteristics data from the imaged image by the contour extracting unit 201 of the finger image processing unit 210 (step S1001). Next, based on the extracted contour data of the finger, the inclination and the contour width of the contour in the case of normally placing the finger are compared with the inclination and the contour width of the contour of the imaged finger by the finger placement determining unit 230 to examine presence or absence of rotation in the horizontal direction of the finger, floating of the fingertip or the base of the finger, bentness of the joint, and the like, thereby determining whether the finger is placed normally or not (step S1002).

As described with reference to FIGS. 5 to 7F, while there are various methods of determining whether the way of placing the finger is normal or not, it is possible to determine the finger placement state at the time of imaging in the registration procedure or the authentication procedure by, for example, previously setting a range of the inclination, contour width, and the like of the contour in the case of normally placing the finger, and determining whether the position of the finger is within the range or not. In addition, upon registering the vein pattern obtained in the state of having the finger normally placed as the matching template, information of the inclination, contour width, and the like of the obtained contour in the determination of the finger placement state is also registered in the memory 103 or the like, and the information of these factors is compared with the imaged image, thereby capable of determining the finger placement state in the imaging of the authentication.

If the finger placement state is not normal, the finger placement state is guided to the user by using voice, moving picture, or the like via the voice output unit 121 and the picture output unit 122 to instruct the user to correctly place the finger (step S1003). If the finger placement state is normal, the steps subsequent to the extraction of characteristics of the vein pattern (step S809) are performed. Since the added steps described above are the same as those in the authentication procedure of FIG. 11, repetitive descriptions thereof will be omitted.

As described above, according to the finger vein authentication device 100 of the present embodiment, by performing the processings illustrated in flowcharts of FIGS. 10 and 11, the finger vein authentication device 100 which is capable of determining the finger placement state upon the registration and the authentication and suitably performing guidance of how to place the finger to the user can be obtained.

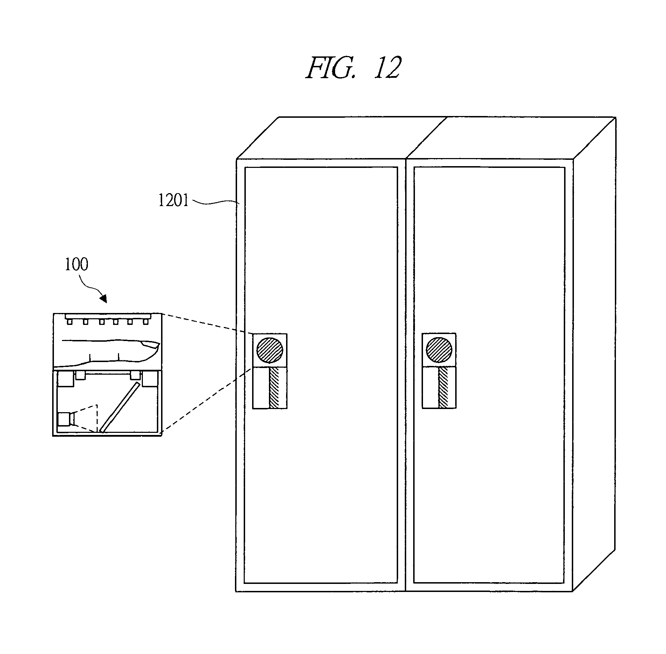

FIG. 12 is a diagram illustrating a mounting example in the case of installing the finger vein authentication device 100 into lockers in a fitness center or the like. In the example of FIG. 12, the finger vein authentication device 100 has a system of irradiating infrared rays from above, and it is configured such that the finger vein authentication devices 100 illustrated in FIGS. 3 and 4 are combined. By installing the finger vein authentication device 100 in a locker 1201 itself, external light is prevented from entering into the finger vein authentication device 100.

Since the finger vein authentication device 100 of the present embodiment performs registration of the matching template through authentication thereof, determination of presence or absence of an inserted finger and finger placement state, indication and explanation of usage of the device and cautions to the user by voice or moving picture, and the like by the finger vein authentication device 100 itself, the stand-alone finger vein authentication device 100 can be used with being installed in lockers 1201 illustrated in FIG. 12 and the like.

In the case of using a finger vein authentication device at an entrance/exit door, a vehicle door, or the like, normally, such a usage is often carried out that once registration of a vein pattern is done, only authentication will be performed thereafter. Thus, registration has been performed with guiding the user how to place a finger, including usage of the device.

On the other hand, in the case of the lockers 1201 etc., such a usage is often carried out that an unidentified number of users repeatedly carry out registrations and authentications. In the case of using the finger vein authentication device 100 on the lockers 1201 etc., registration and authentication are carried out for one user. Further, the different usage from the conventional one is carried out such that, after the user finishes using the device, another user newly carries out registration and authentication. Furthermore, as illustrated in FIG. 12, when the finger vein authentication device 100 is installed in the lockers 1201, it is difficult for a user to check whether his/her finger is placed normally or not as the user cannot clearly see the finger. Due to these reasons, possibility of imaging a vein pattern in a state of having a finger improperly placed is high.

The finger vein authentication device 100 according to the present embodiment is particularly effective in such a usage that an unidentified number of users repeatedly carry out registrations and authentications. It is very important that the finger vein authentication device can determine the finger placement state upon registration and authentication and instruct the user to correctly place his/her finger with regard to the problem in making the user place his/her finger in a proper state arising in the case of lockers in fitness centers and the like.

### <Second Embodiment>

The finger vein authentication device 100 of the first embodiment determines the finger placement state by using the contour of the finger. However, since there are individual differences in the finger contour such as the size or shape of a finger, there would be a case of failing to properly determine the finger placement state when the finger placement state is determined only by using the finger contour information. Consequently, a finger vein authentication device 100 of a second embodiment of the present invention determines the finger placement state, further, by using a touch sensor.

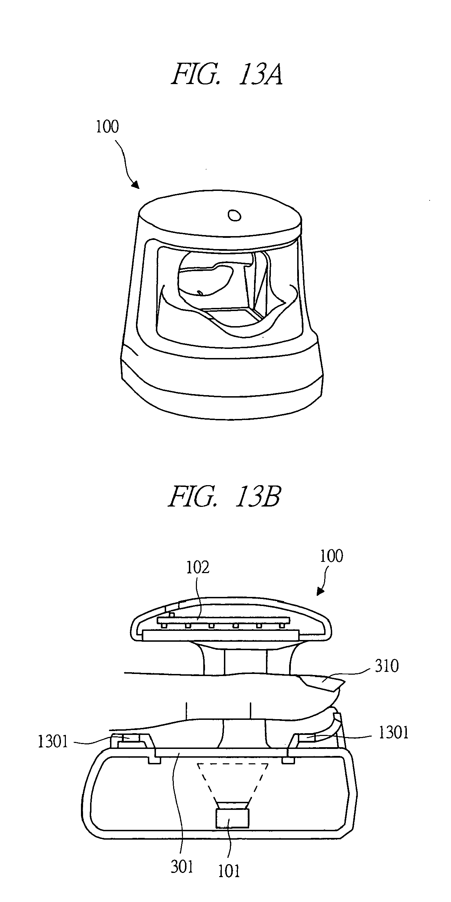

FIGS. 13A to 14B are diagrams each illustrating an example of mounting the finger vein authentication device 100 according to the present embodiment. FIGS. 13A and 13B illustrate an example of the finger vein authentication device 100 in which a touch sensor 1301 is added to the finger vein authentication device 100 of FIGS. 3A and 3B of the first embodiment. FIG. 13A is a perspective view illustrating the exterior of the finger vein authentication device 100, and FIG. 13B is a cross-sectional view of the finger vein authentication device 100.

The touch sensor 1301 detects whether a finger is placed on the device or not, and what kind of type of sensor is not particularly limited. In the present embodiment, descriptions will be made with exemplifying the touch sensor 1301 of a capacitive type. This touch sensor 1301 detects presence or absence of a finger by using a change in capacitance generated when a finger touches the touch sensor 1301. When a finger 310 is placed on the finger vein authentication device 100, the finger 310 touches the touch sensor 1301 and the capacitance is changed, thereby precisely detecting that the finger is placed.

In the finger vein authentication device 100 of the present embodiment, two touch sensors 1301 are provided. One of them is provided at a position corresponding to the portion of the fingertip, and the other is provided at a position corresponding to the portion of the base of the finger. Although there are individual differences in human fingers, generally, human fingers have substantially linear shape. Therefore, if the touch sensors 1301 at the fingertip portion and the base of the finger portion detect that the finger 310 is touched, the finger placement state can be uniquely determined. Note that, while the touch sensors 1301 are provided at two positions of the fingertip portion and the base of the finger portion in the present embodiment, the touch sensors 1301 can be further provided at other portions, and the number of the touch sensor 1301 is not particularly limited.

If only one of the touch sensors 1301 detects that the finger 310 is touched, it can be predicted that the fingertip or the base of the finger is floated or the finger is placed with being rotated in the horizontal direction. In this manner, by using information of detection results of two touch sensors 1301, the finger placement state in which the fingertip or the base of the finger is floated or the finger is placed with being rotated can be determined.

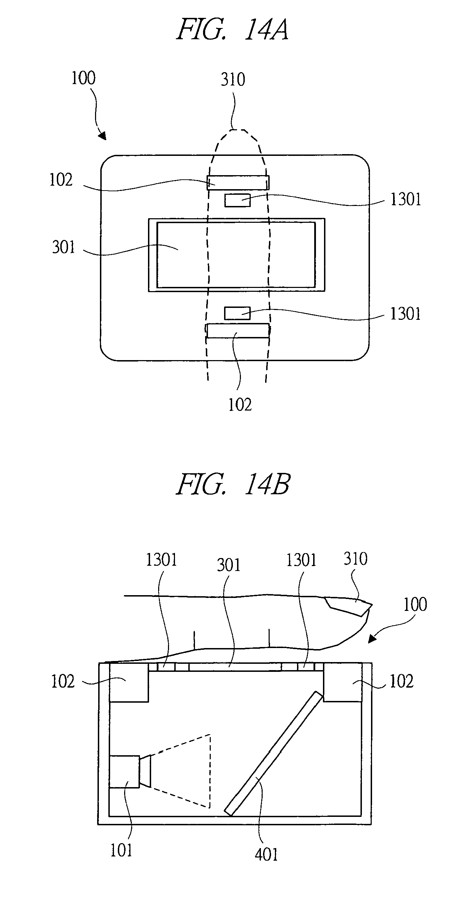

FIGS. 14A and 14B illustrate an example of a finger vein authentication device in which the touch sensor 1301 is added to the finger vein authentication device 100 illustrated in FIGS. 4A and 4B. Similarly to the finger vein authentication device 100 illustrated in FIGS. 13A and 13B, the finger placement state can be determined from detection results of the two touch sensors 1301.

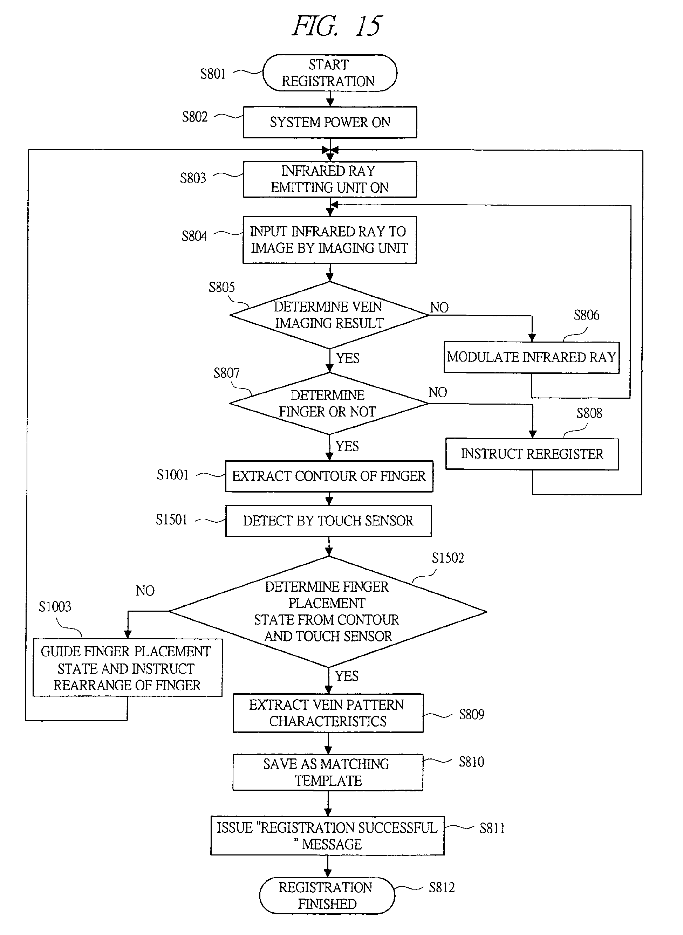

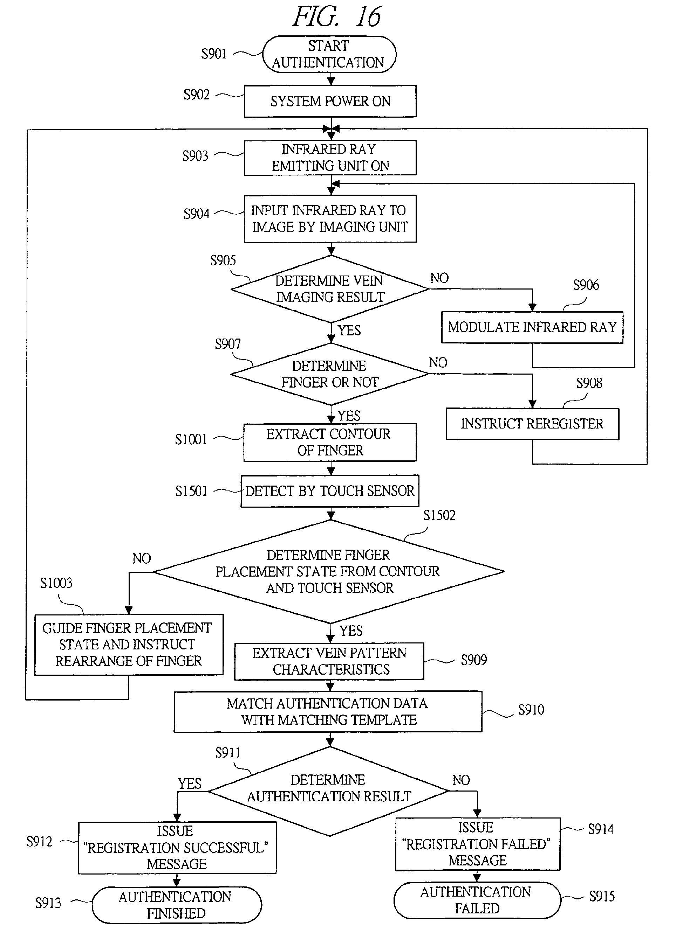

Hereinafter, a registration procedure and an authentication procedure of the finger vein authentication device 100 according to the present embodiment will be described with reference to FIGS. 15 and 16. FIG. 15 is a flowchart illustrating an example of the registration procedure of a vein pattern of the finger vein authentication device 100 according to the present embodiment. In addition, FIG. 16 is a flowchart illustrating an example of the authentication procedure of the finger vein authentication device 100 according to the present embodiment.

The flowcharts of FIGS. 15 and 16 are configured such that a step S1501 for performing a finger placement detection by the touch sensors 1301 is added, and a step S1502 for determining the finger placement state from a contour of the finger and detection results of the touch sensors 1301 is added to replace the step S1002 of determining the finger placement state from the contour of the finger to the flowcharts of FIGS. 10 and 11 in the first embodiment, respectively. As to the other steps, since they are the same with those of the flowcharts of FIGS. 10 and 11, repetitive descriptions thereof will be omitted.

In the flowchart of registration in FIG. 15, after extracting the contour of the finger in the step 1001, whether the finger is placed or not is detected by the touch sensors 1301 and the sensor detecting unit 220 in the step S1501. As described above, the finger vein authentication device 100 of the present embodiment can detect also if the finger is rotated in the horizontal direction, the finger is floated, or the like by providing the touch sensors 1301 at two portions of the fingertip portion and the base of the finger portion. Next, in the step S1502, the finger placement state is determined from an inclination of the contour by the finger placement state detecting unit 230 and detection results of the touch sensors 1301 and the sensor detecting unit 220. Note that, since these added processings are the same in the flowchart of authentication in FIG. 16, descriptions thereof will be omitted.

In the present embodiment, detection results of the touch sensors 1301 and the sensor detecting unit 220 are used to determine the finger placement state. Meanwhile, since the touch sensors 1301 and the sensor detecting unit 220 can detect the situation itself that the finger is placed, the sequence of processings illustrated in flowcharts of FIGS. 15 and 16 can be started with taking the detection of the finger by the touch sensors 1301 and the sensor detecting unit 220 as a trigger.

As described above, according to the finger vein authentication device 100 of the present embodiment, in the determination of the finger placement state, the finger placement state can be determined more precisely by determining with adding information of the detection results of the touch sensors 1301 to the information of the inclination of the contour. Note that the finger vein authentication device 100 of the present embodiment can be also mounted with being installed into the lockers 1201 in a fitness center and the like similar to FIG. 12 of the first embodiment.

### <Third Embodiment>

In the finger vein authentication device 100 of the second embodiment, the finger placement state can be properly determined by using the information of detection results of the touch sensors 1301 in addition to the contour of the finger even when individual differences exist in the size and shape of fingers. However, in this case, it is necessary to add more parts such as the touch sensor 1301 to the finger vein authentication device 100. Consequently, a finger vein authentication device 100 of a third embodiment of the present invention does not require parts for detecting a finger such as the touch sensor 1301, and it determines the finger placement state by using shade information of veins of a finger in addition to a contour of the finger.

FIGS. 17 to 19F are diagrams schematically illustrating images imaged with placing a finger on the finger vein authentication device 100 with highlighting contours and veins of the finger. As FIGS. 5 to 7F, the region of the imaged finger is set in the vicinity of the top joint to the second joint of the finger, and while the wrinkles illustrated in the drawings are not imaged in the actual imaging, they are illustrated for easily recognizing that the object of the image is a finger.

FIG. 17 is a diagram illustrating an example of an image imaged when a finger is normally placed on the finger vein authentication device 100 of FIGS. 3A to 4B. As described above, as the imaged image is expressed by black and white according to the light quantity distribution of infrared rays, a shape and position of a contour 1701, a shape, position, shade of veins 1711, and the like can be detected from the image. Meanwhile, FIGS. 18A to 19B are diagrams illustrating images imaged when a finger is placed in various patterns on the finger vein authentication device 100.

FIGS. 18A and 18B are diagrams illustrating examples of images imaged when a finger is placed with being rotated in the horizontal direction with respect to the imaging window 301. FIG. 18A is a diagram illustrating an example of an image imaged in a state where a finger is rotated in the direction indicated by the arrow as compared with the way of placing the finger of FIG. 17. As compared with the veins 1711 of FIG. 17, an inclination of veins 1811 of FIG. 18A is rotated counterclockwise. Therefore, by comparing the inclination of veins, it can be determined that the actually placed finger is placed in a state of being rotated in the horizontal direction (direction of the arrow).

FIG. 18B is a diagram illustrating an example of an image imaged when a finger is placed in a state of being rotated in a direction (direction of the arrow) opposite to that of FIG. 18A. As FIG. 18A, by comparing the veins 1711 with the inclination of veins 1812, it can be determined that the finger is placed in a state of being rotated in the horizontal direction (direction of the arrow).

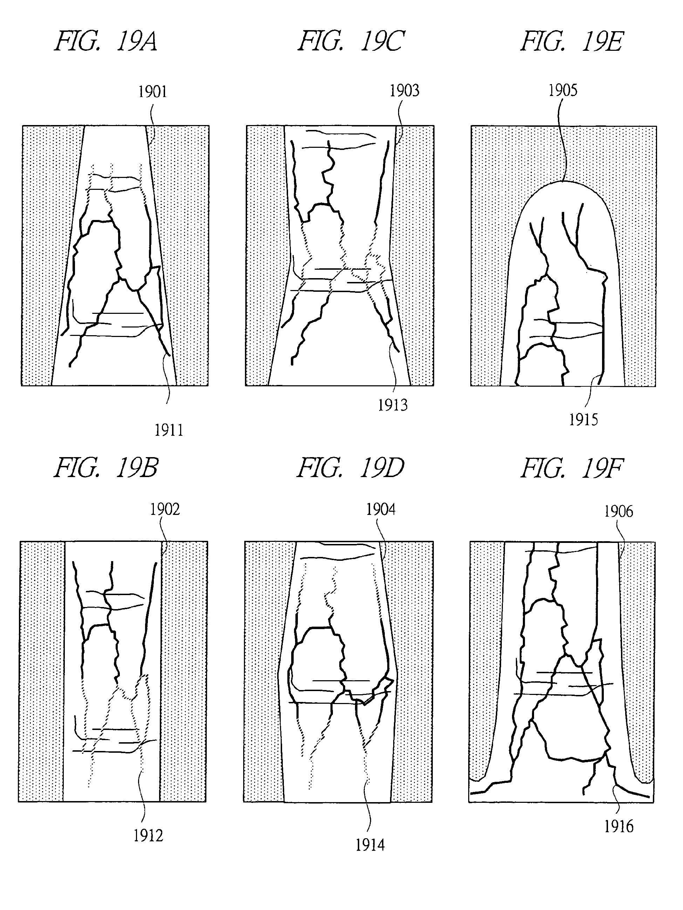

FIGS. 19A and 19B are diagrams illustrating examples of images imaged when a finger is placed in a state of having the fingertip or the base of the finger floated. FIG. 19A is a diagram illustrating an example of an image imaged in a state of having the fingertip floated as compared with the way of placing the finger of FIG. 17. As compared with the veins 1711 of FIG. 17, veins 1911 of FIG. 19A have the shades of veins becoming thinner toward the fingertip portion (upper side of the image). This is because the position of the fingertip at the time of imaging the image of FIG. 19A is away (floating) from the imaging unit 101 as compared with the position of the fingertip at the time of imaging the image of FIG. 17. In this manner, it can be determined that the finger is placed in a state of having the fingertip floated as the shade of veins of the fingertip is thinner while the shade of veins of the base of the finger is unchanged.

FIG. 19B is a diagram illustrating an example of an image imaged when a finger is placed in a state of having the base of the finger floated as compared with the way of placing the finger in FIG. 17. As compared with the veins 1711 of FIG. 17, veins 1912 of FIG. 19B has the shade of the veins becoming thinner toward the base of the finger portion (lower side of the image). This is because the position of the base of the finger at the time of imaging the image of FIG. 19B is away from the imaging unit 101 as compared with the position of the base of the finger at the time of imaging the image of FIG. 17. In this manner, it can be determined that the fingertip is placed in a state of having the base of the finger floated as the shade of veins of the base of the finger is thinner while the shade of veins of the fingertip is unchanged.

FIGS. 19C and 19D are diagrams illustrating examples of images imaged when a finger is placed in a state of having the finger bended and in a state of having the finger warped, respectively. FIG. 19C is a diagram illustrating an example of an image imaged in a state of having the finger bended as compared with the way of placing the finger of FIG. 17. As compared with the veins 1711 of FIG. 17, veins 1913 of FIG. 19C have the shades of the veins being thinner at a portion corresponding to the joint portion of the finger. This is because the position of the joint at the time of imaging the image of FIG. 19C is away from the imaging device 101 as compared with that of FIG. 17. In this manner, it can be determined that the finger is placed in a state of having the finger bended, as the shade of veins of the joint portion is thinner while the shade of veins of the fingertip and the base of the finger are unchanged.

FIG. 19D is a diagram illustrating an example of an image imaged in a state of having a finger warped as compared with the way of placing the finger of FIG. 17. As compared with the veins 1711 of FIG. 17, veins 1914 of FIG. 19D have the shades of veins being thinner at the fingertip portion and the base of the finger portion. This is because the positions of the fingertip and the base of the finger at the time of imaging the image of FIG. 19D are away from the imaging unit 101 as compared with those at the time of imaging the image of FIG. 17. In this manner, it can be determined that the finger is placed in a state of having the finger warped as the shades of veins at the fingertip portion and the base of the finger portion are thinner while the shade of veins of the portion corresponding to the joint portion of the finger is unchanged.

FIGS. 19E and 19F are diagrams illustrating examples of images imaged in a state of having a finger not reaching a normal imaging position and a state of having a finger being across the normal imaging position, respectively. FIG. 19E is a diagram illustrating an example of an image imaged in a state of having a finger not reaching a normal imaging position as compared with the way of placing the finger in FIG. 17. As compared with the veins 1711 of FIG. 17, the veins of the fingertip portion of veins 1915 are not fully imaged within the image in FIG. 19E. This is because the position of the finger at the time of imaging the image of FIG. 19E does not reach the normal imaging position as compared with the position of the finger at the time of imaging the image of FIG. 17. In this manner, it can be determined that the finger is placed without reaching the normal imaging position, as the veins of the fingertip portion are not fully imaged within the image.

FIG. 19F is a diagram illustrating an example of an image imaged in a state of having a finger being across the normal imaging position as compared with the way of placing the finger of FIG. 17. As compared with the veins of FIG. 17, veins of the base of the finger are imaged in veins 1916 of FIG. 19F. This is because the position of the finger at the time of imaging the image of FIG. 19F is placed across the normal imaging position as compared with the position of the finger at the time of imaging the image of FIG. 17. In this manner, it can be determined that the finger is placed in the state of being across the normal imaging position as the veins of the base of the finger that does not exit in FIG. 17 is imaged.

As described with reference to FIGS. 19A to 19F, it can be determined how a finger is placed by comparing the shade or position of veins of a finger in the case of having the finger normally placed with the shade or position of veins of an imaged finger.

The position to place a finger on the finger vein authentication device 100 is a position at which veins can be imaged well, and the imaging unit 101 is provided at a position at which veins can be imaged well. As described with reference to FIGS. 17 to 19F, if the position to place a finger is optimum to the imaging unit 101, the shade of veins is imaged to be thick. If the fingertip is floated or the base of the finger is floated, the distance from the imaging unit to the finger is far, and so the shade of the veins of the floating portion of the finger is imaged to be thin. Therefore, while an example of detecting floating of the fingertip and the base of the finger by the touch sensors 1301 has been described in the second embodiment, floating of the fingertip and the base of the finger can be also determined similarly to the second embodiment, according to thickness of the shades of the fingertip and the base of the finger.

Further, when the shade of veins is used, it is easy to detect floating of side surfaces of a finger that has been difficult to be detected by the touch sensor 1301. For example, in the case where the right side of the finger is floated, the touch sensor 1301 determines that the finger is placed when the left side touches the sensor portion. However, if registration of veins is carried out with the side surfaces of the finger being floated, the authentication accuracy is possibly lowered because imaging will not always be successful to have the same way of placing the finger upon authentication. Accordingly, focus on the shade of veins of side surfaces of a finger. For example, when the right side of the finger is floated, the shade of veins on the right side is thin. On the other hand, the veins on the left side are imaged with a good thickness, and so it can be determined that the finger is placed in the state of having the right side of the finger being floated.

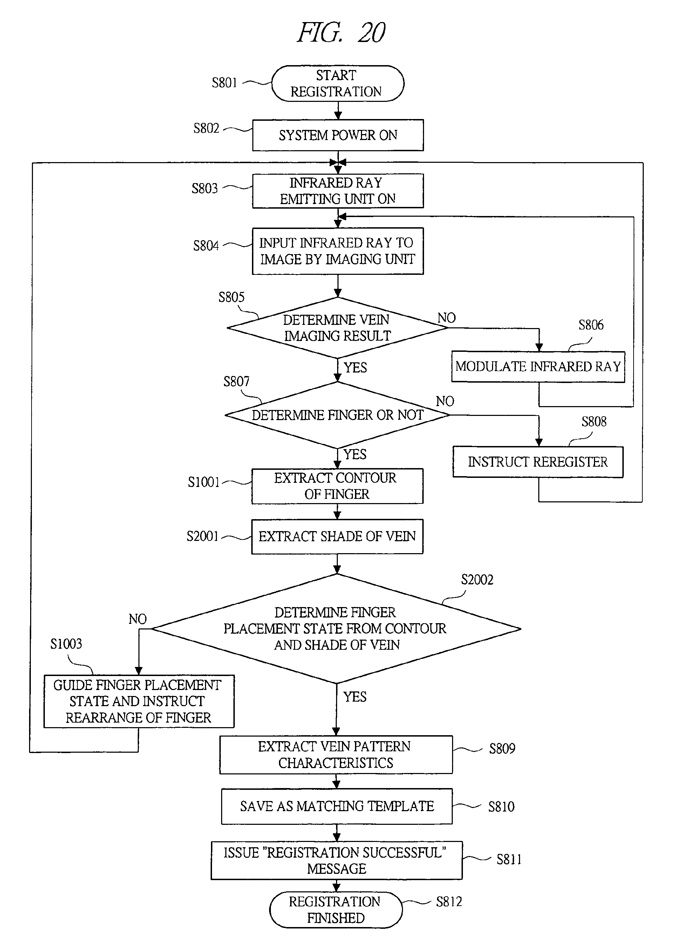

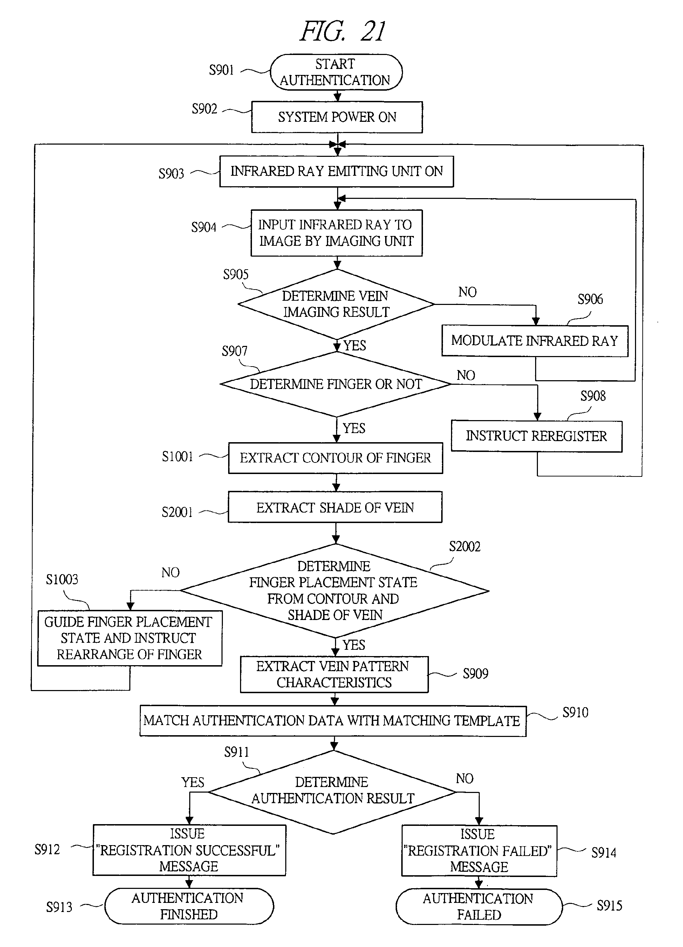

Hereinafter, a registration procedure and an authentication procedure of a vein pattern according to the finger vein authentication device 100 of the present embodiment will be described with reference to FIGS. 20 and 21. FIG. 20 is a flowchart illustrating an example of the registration procedure of a vein pattern of the finger vein authentication device 100 according to the present embodiment. In addition, FIG. 21 is a flowchart illustrating an example of the authentication procedure of the finger vein authentication device 100 according to the present embodiment.

Each of the flowcharts of FIGS. 20 and 21 has a step S2001 of extracting the shade of veins of a finger and a step S2002 of determining the finger placement state from the contour of the finger and the shade of the veins to replace the step S1002 of determining the finger placement state from the contour of the finger, which are added to the flowcharts of FIGS. 10 and 11 of the first embodiment. Since other steps are the same with those of the flowcharts of FIGS. 10 and 11, repetitive descriptions thereof will be omitted.

In the flowchart of the registration in FIG. 20, after extracting the contour of the finger in the step S1001, the shade of the veins is extracted by a vein shade extracting unit 202 of a finger image processing unit 210 from an imaged image of the finger in the step S2001. Next, in the step S2002, the finger placement state is determined from the inclination of the contour and the shade of the veins by a finger placement state determining unit 230 in the step S2002. Note that these added processings are the same also in the flowchart of the authentication in FIG. 21, descriptions thereof will be omitted.

The method of determining the shade of veins is such that, for example, a range of the shade of veins in the case of having the finger normally placed is previously set, and the shade of the imaged image is compared with the previously set range of the shade, thereby determining the finger placement state, similarly to the method of determining the contour of the finger described above.

Note that, in the present embodiment, the way of placing a finger is determined with using information of the shade of veins in addition to the contour of the finger. Meanwhile, as described with reference to FIGS. 18A to 19F, the way of placing a finger can be determined also by a position or inclination of veins. In addition, for example, the way of placing a finger can be determined also by a density of veins. As compared with the state of having a finger normally placed, for example, if a finger is placed in the state of having the fingertip or the base of the finger floated, the finger is imaged in a state of having the size reduced at the portion being away (floated) from the imaging unit 101. Since the density of veins is increased in the image of this portion, it can be determined that the finger is placed in the state of being floated. In this manner, to determine the finger placement state with using information of a position, inclination, or density of veins, a configuration having a vein position detecting unit 203 and a vein density extracting unit 204 in the finger image processing unit 210 can be provided as illustrated in FIG. 2.

As described above, according to the finger vein authentication device 100 of the present embodiment, the finger placement state can be determined more precisely without providing parts such as the touch sensor 1301 by making a determination with adding information of the shade of veins to information of the inclination of contour upon determining the finger placement state. Note that the finger vein authentication device 100 of the present embodiment can be also mounted with being installed in the lockers 1201 in a fitness center and the like similar to FIG. 12 of the first embodiment.

In the foregoing, the invention made by the inventors of the present invention has been concretely described based on the embodiments. However, it is needless to say that the present invention is not limited to the foregoing embodiments and various modifications and alterations can be made within the scope of the present invention.

For example, the finger placement state is determined based on information of the contour in the first embodiment, the finger placement state is determined based on information of the contour and information of the touch sensor in the second embodiment, and the finger placement state is determined based on information of the contour and information of the shade of veins in the third embodiment. However, combinations of information items for determining the finger placement state are not limited to those of the above-described embodiments, and it is possible to accordingly use information items combined, including information of an inclination, position, or density of veins.

The present invention can be used for a finger vein authentication device which performs personal authentication by a vein pattern of a finger.

## Claims

1. A finger vein authentication device comprising:
an infrared ray emitting unit for irradiating infrared rays on a finger placed by a user;
an imaging unit for obtaining a vein image based on the infrared rays irradiated on the finger by the infrared ray emitting unit;
a finger information register unit for extracting information of a vein pattern from the vein image obtained by the imaging unit and registering the same as a matching template in a memory; and
a finger vein authentication unit for extracting information of a vein pattern from the vein image obtained by the imaging unit and matching the same with the matching template to perform a personal authentication, wherein
the device further comprises:
a finger image processing unit for extracting characteristics data of the finger from the vein image obtained by the imaging unit;
a finger placement state determining unit for analyzing the characteristics data of the finger extracted by the finger image processing unit, and determining whether a placement state of the finger upon obtaining the vein image by the imaging unit is good or not; and
a picture output unit for outputting instructions to the user by a picture and/or a voice output unit for outputting instructions to the user by voice, and,
if a determination result of the finger placement state determining unit is not good, based on an analysis result of the characteristics data, the user is instructed to correctly place the finger by the voice output unit to obtain the vein image by the imaging unit again.

2. The finger vein authentication device according to claim 1,
wherein the finger image processing unit includes a contour extracting unit for detecting a contour of the finger from the vein image obtained by the imaging unit and extracting information of an inclination and a shape of the detected contour as the characteristics data of the finger, and
the finger placement state determining unit determines whether the placement state of the finger upon obtaining the vein image by the imaging unit is good or not according to whether the inclination and shape of the contour extracted by the contour extracting unit is within a predetermined range or not.

3. The finger vein authentication device according to claim 1 or claim 2, further comprising:
a touch sensor unit provided at two or more portions including a fingertip portion and a base of a finger portion of a position at which the finger is placed; and
a sensor detecting unit for detecting that the finger is touching each of the touch sensor units, wherein
the finger placement state determining unit further determines, based on a detection result of the sensor detecting unit, whether the placement state of the finger upon obtaining the vein image by the imaging unit is good or not according to whether the finger is touching every one of the touch sensor units or not.

4. The finger vein authentication device according to any one of the preceding claims, wherein
the finger image processing unit includes a vein shade extracting unit for extracting information of a shade of veins of the finger as the characteristics data of the finger from the vein image obtained by the imaging unit, and
the finger placement state determining unit determines whether the placement state of the finger is good or not upon obtaining the vein image by the imaging unit according to whether the shade of the veins of the finger extracted by the vein shade extracting unit is within a predetermined range or not.

5. The finger vein authentication device according to any one of the preceding claims,
wherein
the finger image processing unit includes a vein position extracting unit for extracting information of an inclination and a position of the veins of the finger as the characteristics data of the finger from the vein image obtained by the imaging unit, and
the finger placement state determining unit determines whether the placement state of the finger upon obtaining the vein image by the imaging unit is good or not according to whether the inclination and position of the veins of the finger extracted by the vein position extracting unit are within a predetermined range or not.

6. The finger vein authentication device according to any one of the preceding claims, wherein
the finger image processing unit includes a vein density extracting unit for extracting information of a density of the veins of the finger as the characteristics data of the finger from the vein image obtained by the imaging unit, and
the finger placement state determining unit determines whether the placement state of the finger upon obtaining the vein image by the imaging unit is good or not according to whether the density of the veins of the finger extracted by the vein density extracting unit is within a predetermined range or not.

7. The finger vein authentication device according to claim 1, wherein the device further comprises:
the finger image processing unit including one or more extracting units of:
a contour extracting unit for detecting a contour of the finger from the vein image obtained by the imaging unit and extracting information of an inclination and a shape of the detected contour as the characteristics data of the finger;
a vein shade extracting unit for extracting information of a shade of veins of the finger as the characteristics data of the finger from the vein image obtained by the imaging unit;
a vein position extracting unit for extracting information of an inclination and a position of the veins of the finger as the characteristics data of the finger from the vein image obtained by the imaging unit; and
a vein density extracting unit extracting information of a density of the veins of the finger as the characteristics data of the finger from the vein image obtained by the imaging unit; and/or
each means of a touch sensor unit provided at two or more portions including a fingertip portion and a base of a finger portion of a position at which the finger is placed, and a sensor detecting unit for detecting that the finger is touching each of the touch sensor units, and
the finger placement state determining unit further determines whether the placement state of the finger upon obtaining the vein image by the imaging unit is good or not according to whether characteristics data of the finger extracted by every one of the extracting units are within predetermined ranges and/or whether the finger is touching every one of the touch sensor units or not.

8. The finger vein authentication device according to claim 3, wherein
a sequence of processings for performing a registration of information of the vein pattern of the finger or a sequence of processings for performing a personal authentication according to the vein pattern of the finger is started with taking such a detection of the sensor detecting unit that the finger is touching every one of the touch sensor units as a trigger.

9. The finger vein authentication device according to any one of the preceding claims, wherein,
when the finger information register unit registers the information of the vein pattern extracted from the vein image obtained by the imaging unit as the matching template,
the finger placement state determining unit stores the characteristics data of the finger extracted by the finger image processing unit in the memory for determining whether the placement state of the finger is good or not, and,
when the finger vein authentication unit performs a personal authentication by extracting the information of a vein pattern from the vein image obtained by the imaging unit and matching the information with the matching template,
the finger placement state determining unit compares the characteristics data of the finger stored in the memory with the information extracted by the finger image processing unit to determine whether the placement state of the finger upon obtaining the vein image by the imaging unit is good or not.

10. The finger vein authentication device according to any one of the preceding claims, wherein,
when the user places the finger, a picture of the placement state of the finger is indicated to the user by the picture output unit.

11. The finger vein authentication device according to any one of the preceding claims, wherein,
when the user places the finger, how to place the finger, usage of the finger vein authentication device, or cautions is indicated to the user by the picture output unit and the voice output unit.
